# EUROPEAN PATENT APPLICATION

(11) **EP 1 645 992 A1**
(43) Date of publication of application: **12.04.2006**
(21) Application number: 04104954.5
(22) Date of filing: 08.10.2004
(51) Int. Cl.: G06K 17/00

(54) **Methods and systems for marking, tracking and authentication of products**

(71) Applicant: Philip Morris Products S.A., 2000 Neuchâtel (CH)
(72) Inventor: Châtelain, Philippe, 1373, Chavornay (CH); Sager, Alain, 1615, Bossonnens (CH)
(74) Representative: Lloyd, Patrick Alexander Desmond

(57) **Abstract**

The invention foresees the labeling of each manufactured good with a digitally verified unique numeric identifier, and a central checking center allowing users to verify the authenticity of a particular cigarette pack or case by means of a cell phone interface. A system of secret key sharing allows secure authentication of each item and prevents code breaking or misuse.

## Description

### Field of the invention

The present invention relates to the marking, the tracking and the authentication of traded goods, in particular, but not exclusively, of packaged goods, for example packs or cartons of cigarettes and other tobacco products. The present invention also relates to a method for production control.

### Description of related art

Contraband and counterfeit are the cause of significant loss of revenues for the producers of traded goods as well as for national authorities. Moreover, the illegal sale of counterfeited goods of inferior quality is detrimental for the customer and for the manufacturer.

Legally produced goods may also be illegally imported or traded, for example in order to evade taxes or national regulations. It is therefore a major concern in several trade areas to detect and avoid unauthorized parallel import channels.

Problems associated with contraband and counterfeit are particularly acute for goods subject to special taxation, like tobacco products. They are however also relevant for many other kinds of traded products carrying a strong brand value, in particular for internationally traded products, like perfumes, alcohols, watches and luxury goods in general.

It is a major preoccupation of the manufacturers of such products to develop methods for reliably marking genuine products such as to allow for the unequivocal identification of non-genuine products and for detecting illegal imports.

It is a common practice to identify traded goods by a production code, or serial number, impressed on the package, for example a cigarette pack or carton. Such production code, under certain conditions, enables the identification of the production site, and the tracking of the trade chain for a particular item. Such knowledge is used for identifying smuggled items.

A limitation of this approach is however that the interpretation and the validation of these production codes is often time consuming and cumbersome. For example, authentication of production codes may involve that every production code impressed on a manufactured item is recorded in a database and/or that large amount of confidential data is transferred from the manufacturing points to a central database, which may jeopardize reliability and safety.

Another limitation of such an approach is that the production codes can easily be imitated or cloned. To partially obviate this limitation, it is known to add a covert taggant to the ink used for printing the production code on a package. Counterfeit items carrying clones of valid codes can be thus detected by the absence of the covert taggant. The security provided by this method entirely depends on the ability to control the sources and the availability of the taggant.

It is a goal of the present invention to provide improved methods and systems for the marking and/or authentication of traded goods, in particular packaged goods, which methods and systems substantially avoid or significantly reduce the shortcomings of the state of the art methods and systems.

In particular it is an aim of the present invention to provide methods and systems for marking and authentication which can be accessed and interrogated remotely by an ordinary network, for example a telephone network or a mobile telephone network.

It is a further aim of the present invention to provide methods and systems for marking and authentication which cannot be violated by counterfeiters.

A further goal of the present invention is to provide a tracking method and system allowing to easily check the genuineness of a manufactured item on sale, for example within a few seconds at the point of sale.

A further aim of the present invention is to provide a method for identifying cloned codes and unauthorized code duplications.

Another goal of the present invention is to provide a method and a system for control of the production volume, for example of a given manufacturer, manufacturing site or manufacturing line.

### Summary of the invention

The present invention includes several methods and systems attaining one or more of the aforementioned objectives, in particular the methods and systems which are the objects of the independent claims. Preferred embodiments and modes of realization are objects of dependent claims.

In particular the present invention concerns a method of marking manufactured items, comprising the steps of: provision of a collection of secret codes to at least one checking center and to each manufacturing line for said manufactured items; generation in said manufacturing line of an identification (lD) code for each manufactured item; digital signature of said ID code by means of a secret obtained from said collection of secret codes and known to said checking center; marking each manufactured item with said signed ID code.

Furthermore the present invention concerns a method of authenticating an item marked according to the method above and comprising the steps of: transmission by a user of said signed ID code to said checking center; authentication of said unique ID code in said checking center.

The present invention also concerns a marking system for manufactured items comprising : at least one salts generator, for generating a collection of secret codes; at least one checking center; one or more production lines, for the manufacturing of said items, each production line comprising: a code generator for generating an ID code for each manufactured item; data transmission means, for transmitting a secret obtained from said collection of secret codes to said checking center; digital signature means, for signing of said ID code by means of said secret;
marking means for marking each manufactured item with said signed ID code.

Furthermore the present invention concerns a method of authenticating an item, comprising the steps of: generating a code and signing said code by a digital signature code within a code generator; marking said item with said signed code; transmission by a user of said signed code to a central checking center over a public network; authentication of said signature in said public checking center; retrieving of the significance of said code in said public checking center; transmitting said significance to said user over said public network.

In addition the present invention concerns a method of controlling the manufacturing volume of manufactured items marked according to the marking method above, comprising the steps of: gathering information on volume of production in said checking center; on request providing said information, for example to an authorized user..

Furthermore the present invention concerns a method of tracking an item marked according to the marking method above, comprising the steps of: transmission by a user of said signed ID code to said checking center; authentication of said ID code in said checking center; retransmission of tracking information relative to said ID code to said user.

### Brief Description of the Drawings

The present invention will be better understood from the modes of realization described hereinafter and illustrated by the appended drawings in which:
Figure 1 represents, in schematic form, a marking and authentication system according to the invention.
Figure 2 represents schematically a format of a marking code according to one aspect of the invention.
Figure 3 represents schematically a code generation scheme according to one aspect of the invention.
Figure 4 represents schematically a code authentication scheme according to one aspect of the invention.

### Detailed Description of the Invention

The items to be marked are produced in one or more manufacturing lines 101, 102. Each manufacturing line represents a production facility for one or a plurality of manufactured items. For example, a manufacturing line may be a cigarette making and packaging line, with the manufactured items being, for example, cigarette packs and cartons of at least one brand. The production may be organized in batches, each batch being dedicated to the production of a certain amount of identical manufactured items, for example cigarette packs and cartons of a particular brand and type.

If there are two or more manufacturing lines, these may be physically located in one production site, or dispersed in different production centers 10 having various geographical locations.

Each manufacturing line comprises a code generator 106 which is arranged for generating and encrypting an identification code for each item manufactured in the manufacturing line 101. The manufacturing line 101 also comprises marking means, 107, for example a continuous inkjet printer or a drop-on-demand inkjet printer, or a laser, or any other printing or marking means allowing marking variable information, for impressing the identification code on each manufactured item. According to the products' packaging, the identification codes can be impressed on each item, on an external package, on labels and so on. In a variant of the invention, the identification code may be printed on adhesive tags, or label, to be applied on the manufactured items, preferably non-removably.

In one embodiment of the invention the identification code is printed by a laser beam on a layer of laser-sensitive material deposited on the item or on the item's package. For example, this allows impressing the code through a transparent wrapping layer.

Other possible supports for the identification code include holographic printing, for example according to the HoloSpot® format.

The invention may include as well radio, electronic or magnetic recording of the identification code, for example by means of a RFID transponder, EMID® tags or any other tagging means.

Preferably the system has means to count and report the number of generated and printed codes for each production batch or for a given production period, as it will be better explained in the following.

The manufacturing lines 101 comprise a code generation system 106 which generate a unique encrypted identification code SUPI for each item produced. Preferably, the code generation system 106 is a fully autonomous computer or microcontroller dedicated to a particular manufacturing line 101. Preferably the code generator 106 is able to communicate with the checking center 30 via a secured internet connection 34, via a local central server 15 communicating with the checking center 30, or via any other suitable data communication means.

The checking center has the task of receiving and centralizing production data and processing the queries coming from users (80, 70).

In one variant of the present invention, several levels of packaging, such as packs and cartons comprising several packs, which are manufactured on the same manufacturing line 101, may be marked using common hardware resources.

In one variant of the invention the code generator 106 may comprise different software modules or shared software modules, loaded on a computer which is shared by several manufacturing lines, and serve several manufacturing lines at the same time. Also, the code generator 106 may be remotely placed, for example in the checking center, and communicate the generated codes to the production lines, as required, by appropriate network means.

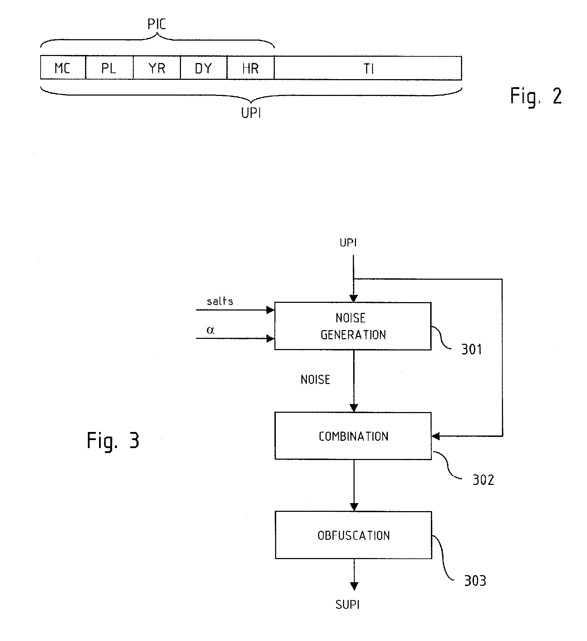

According to one embodiment of the invention, exemplified in figure 2, the unique identification code SUPI is obtained by processing the information of a Production Information Code PIC. The PIC combines various pieces or elements of information related to the manufacture of the item, such as a code MC identifying a production center 10, a code PL identifying a particular manufacturing line 101 within a production center 10, and codes YR, DY, HR identifying the year, the day and the hour, respectively, when a particular item is manufactured.

The elements of information included in the product information code PIC can be combined by means of decimal or binary digit juxtaposition, by algebraic composition, by applying to each element a predefined shift value and adding all the shifted values together, or by any other computational means, for obtaining a production information code PIC. Preferably the composition function is invertible, in order to allow decomposition of the production information code PIC into the original information MC, PL, YR, DY, HR.

During each production hour, a manufacturing line fabricates a large number of manufactured items 43. Each item 43 is identified, within a production hour, by an individual number TI, for example a progressive number corresponding to the chronological production sequence. Other manners of generating or assigning individual numbers are obviously possible and comprised within the scope of the present invention.

The combination of the production information code PIC and of the individual number TI provides an item identifier UPI. For the sake of simplicity the described embodiments and examples refer to the case in which each UPI is unique and specific to a manufactured item, for example to a single cigarette pack or cigarette carton. However the present invention is not limited to this case, and may as well include variants with non-unique UPI numbers, distinguishable from each other from their different digital signature.

The structure of the UPI code and the significance of the various fields composing the UPI code are given here by way of example and should by no means be interpreted as a limitation of the invention. Any code suitable as item identifier code, having any arbitrary structure and significance, may be employed in the frame of the present invention.

A pseudorandom noise is combined with the UPI in order to authenticate the code generator 106 that produces the code. In this manner, the code marked on each manufactured item produced by a particular manufacturing line 101 is digitally signed by the code generator 106 of said manufacturing line 101 in a manner that the checking center 30 can verify.

In order to ensure verifiability by the checking center, the pseudorandom noise code may obtained by encrypting a copy of the UPI code with a secret shared by the code generator and the checking center. In the context of the present document, 'secret' designates any data that is used for the generation or for the authentication of a digital signature. Other ways of adding a digital signature to the UPI code, for example by using asymmetric cryptography, are also possible and included within the scope of the present invention.

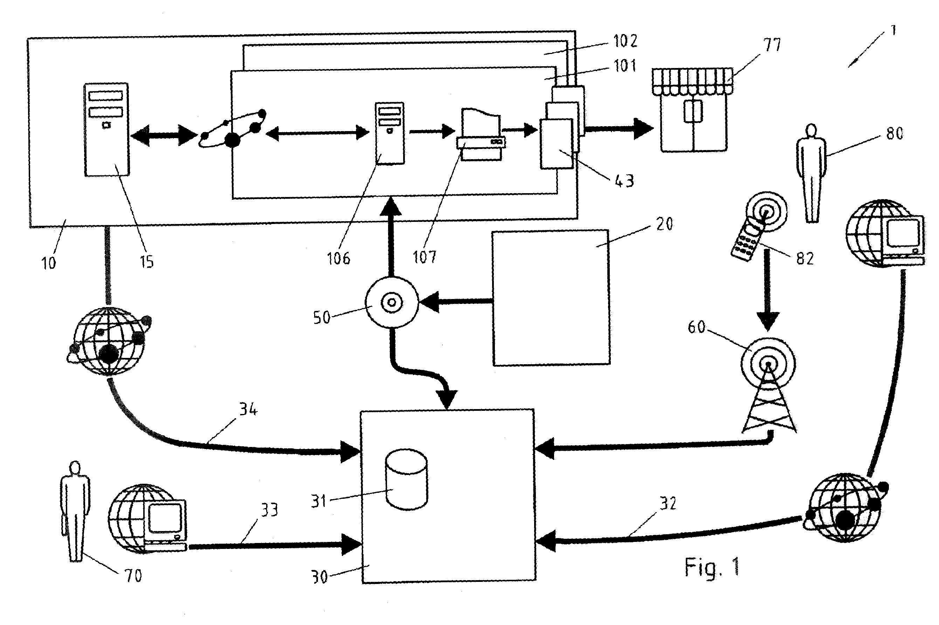

According to one embodiment of the present invention, described with reference to figure 1, a centralized salts generator center 20 generates a large collection of secret codes, hereinafter designated as a 'salts matrix' containing a large number of precalculated random or pseudorandom data. Each salts matrix is preferably unique and is transmitted, in duplicate, to the intended manufacturing line 101 and to the checking center 30. Each manufacturing line 101 receives a salts matrix which is different from those of the other manufacturing line 102.

The salts matrixes transmitted to the checking center are stored in a database 31 accessible to the checking center 30 and preferably included in the checking center 30, in relation with the production lines 101, 102 to which they belong.

In the production lines, 101, 102, the salts matrixes are used for generating secret keys which are used for the encryption of the UPI and the generation of an electronic signature, as it will be explained later.

In order to ensure authenticity, confidentiality and integrity of the salts matrix, the salts matrix is preferably not transferred over a network connection, but rather recorded on non-volatile data carriers 50 which are physically transferred to the checking center 30 and to the manufacturing lines 101, 102. For example the salts matrixes could be recorded on CD-ROMs (Compact Disc Read-Only Memory), on DVD-ROMs (Digital Versatile Disc Read-Only Memory), on removable hard disks, on magneto-optical devices or on any suitable non-volatile memory device.

Preferably, to further increase safety, the salts matrixes are encrypted and digitally signed by the salts generator 20, by means of a suitable encryption and authentication technique, like DES (Digital Encryption Standard), RSA (Rivest, Shamir, and Adelman algorithm), and the like.

In a preferred variant of the invention, a salts file contains the following components:
- A unique identifier of the salts file.
- The salts matrix encrypted by using a strong cipher, like triple-DES, or AES (Advanced Encryption Standard), for example, according to a key generated in the salts generator 20. A salts matrix may take the form, for example, of a long string of random or pseudorandom digits or characters.
- The encrypted key needed for decoding the salt matrix, encrypted with a public-key cipher, for example RSA, using a public key of the checking center 30 (this component is requested in the salts file destined to the checking center 30 and may be omitted in the file destined to the production line 101).
- A digital signature of the salts generator, obtained for example by encoding a digest of the full message with a private key of the salts generator 20, whose public counterpart is known by the checking center.

According to this variant of the invention, the code generator of every production line 101 must register with the checking center 30. This registration occurs only whenever a new salts matrix has to be used, or at prescribed intervals, but the system does not require a constant communication between the code generators and the checking center.

ln further detail, the registration procedure comprises the following steps:
- The codes generator 106 of the production line 101 connects to the checking center 30 via a secured internet connection, or via a local central server connected to the internet, and initiates the registration by identifying itself.
- One CD-ROM 50, containing a salts file, is mounted in the code generator, its integrity is verified by means of its electronic signature, and its unique identifier is transmitted to the checking center 30.
- The checking center retrieves its own copy of the salts file, locally or remotely stored, by means of the unique identifier.
- If the salts file has been already used, the checking center stops the registration and requests another salts file, or initiates appropriate action, for example issuing a warning to the user or logging it in a security journal.
- If the salts file has not yet been used, and if the identification of the codes generator is satisfactory, the checking center decrypts the secret key of the salts file with its private key, and transmits it to the codes generator over the secured internet connection 34.
- The codes generator decrypts the salts matrix.

The registration procedure is arranged in a way that the salts matrix is never transferred over the internet, but only a one-use decryption key is transmitted from the checking center 30 to the code generator 106. The salts matrix is made available to the code generator only after a valid registration with the checking center. In this way, an unauthorized use of the code generator is prevented, because no valid code can be generated.

Preferably the decrypted salts matrix is deleted when the code generator is put out of service to prevent that a malicious user may gain access to the salts matrix without proper registration. Additionally further means to disable to code generator and prevents an unauthorized use of the code generator and of the production line may be provided, according to the circumstances.

An example of operation of the code generator 106 is now described with reference to the figure 3.

In each production line 101, 102 the code generator 106 generates, at the beginning of each production batch, a random salt index alpha?and transmits the salt index alpha to the checking center 30, along with various information related to the item to be manufactured such as, for example, brand, intended market of destination, packaging, and any appropriate information. A new salt index alpha is extracted at every change of production batch. Preferably the checker acknowledges successful receipt of the alpha code to the code generator.

In a variant of the present invention the UPI code of the first item to be produced in the new production batch is also transmitted to the checking center 30, together with the alpha code. ?

The salt index alpha is stored in the database 31 in relation with various information related to the item to be manufactured. In this way, the checking center 30 will be able, upon reception of a request for checking a particular SUPI code, to retrieve the particular alpha and knowing the salts matrix used by the code generator 106 for the signature of that SUPI code, validate the signature.

Preferably, the salt index alpha needs not to be communicated in real time to the checking center 30, at the beginning of each production batch. Once a value of alpha has been chosen, the code generator can immediately start the generation of valid codes and the value of alpha can be communicated to the checking center after a delay of some hours, or even longer, according to the availability of the network connection.

Also, the invention may foresee fallback procedures for communicating the alpha code to the checking center, in case no network connection is available for a long period, for example by fax or telephone, thus improving the reliability of the system of the invention.

The random salt index alpha, the salts matrix and the UPI code are used in the code generator for generating a noise code (step 301) which is safe from cryptographic attacks, i.e. which does not allow the reconstruction of the original values of alpha, salts matrix and UPI. A variety of known methods are available for generating such noise code including, but not exclusively, table substitution, indexing, hashing techniques, and variations thereof. All these techniques and variations thereof are possible and included in the present invention. The noise code so generated is univocally calculated from the UPI, yet the inverse operation is computationally impossible.

The noise code is used in the context of the invention as a digital signature, allowing the validation of the UPI code, as will be explained further.

Preferably the alpha code and the salts matrix are combined in a different way for each manufactured item, in order to render the digital signatures robust against decryption attempts.

The salts matrix and the alpha code are known only by the code generator and by the checking center. Together they constitute a secret allowing the code generator to generate signed codes which the checking center can subsequently verify.

The UPI number and the calculated noise code are combined (step 302) and, preferably, the resulting code is obfuscated (step 303), destroying correlations between successive codes. The obfuscation operation is preferably invertible, in order to allow the checking center to retrieve the original UPI and noise value. Several known obfuscation techniques are possible in the framework of the invention. The particular obfuscation algorithm chosen, however, is preferably not published.

The result of the obfuscation, the unique SUPI code, is finally printed on the manufactured items by the printer 107. Each of the items 43 is marked with a unique digitally signed SUPI code, which allows, inter alia, identification of the production batch in which it has been manufactured.

Preferably, information relative to the production batch, such as product type, brand, intended market of destination, packaging and so on, are stored in the database 31 accessible to the checking center together with the random number alpha upon start of the production batch.

The SUPI code can be printed on the manufactured item with a variety of printing and marking techniques, for example continuous inkjet printing, drop-on-demand printing, laser, and so forth. In a preferred variant of the invention, the SUPI code is printed in a human readable format, or machine-readable formats like 1-D or 2-D barcodes or characters suitable for OCR (Optical Character Recognition).

Preferably the SUPI code is printed or recorded by a printing or recording means comprising a code counter, a register, or any other appropriate device, for counting the exact number of marked items, during a production batch, or in a given time interval. The exact number of marked items may be also stored in the database 31 accessible to the checking center upon completion of a production batch, or at appropriate moments, and used for production volume control.

ln a preferred variant of the invention, the SUPI code is printed with an ink containing a covert taggant, in order to allow a quick check of the validity without the need of querying the checking center.

In another variant of the invention, the production line 101 is equipped with a sensor unit detecting the presence of the covert taggant. The sensor unit can be connected to the controller of the production line, thus enabling the rejection of items not properly marked with the tagged ink. The controller can further be set in a way preventing the production line to operate should the sensor unit be disconnected, faulty or a defined number of items be rejected subsequently.

In another variant of the invention, the production information code (PIC code) is also repeated on the manufactured item, in plain format, without encryption or obfuscation. This information allows the user to further verify the answer provided by the checking center 30 and might further be used for management and monitoring of the supply chain.

After leaving the production center 10, the manufactured items 43 are distributed and commercialized in the usual way. At each stage of the distribution and of the commercialization process, the authenticity of the item can be verified by sending to the checking center a query containing the SUPI code of the package. Such verification may be requested for example by generic users, like retailers, consumers, or customs agents, and by privileged users, like for examples employees of the manufacturers, or organizations having a privileged agreement with the manufacturer. The SUPI codes may also be employed for tracking the manufacturing items along the distribution and commercialization chain.

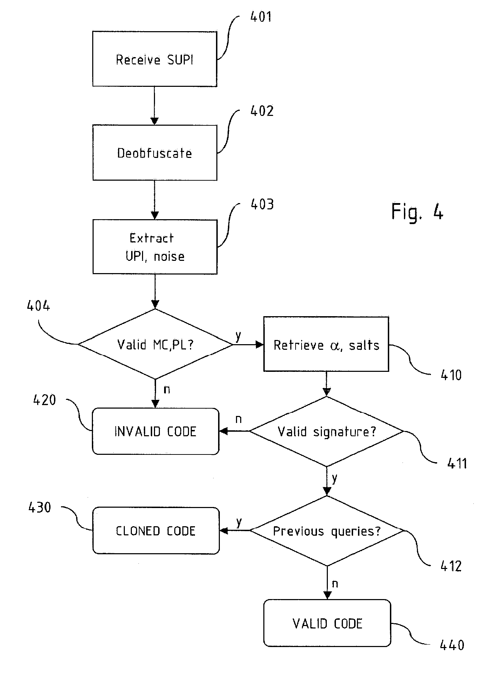

The processing of a request of validation of a SUPI code in the checking center is now described with reference to the figure 4. The received SUPI code is first de-obfuscated (step 402), i.e. the inverse of the obfuscation function described above is applied, and then the original UPI and noise component are extracted (step 403). The checking center performs first a first level authentication (step 404) on the production center MC and the production line PL. If PL is found to correspond to an existing production line of production center MC, the authentication proceeds to the next level, otherwise an answer is generated, specifying that the SUPI code is invalid, and that the item is a counterfeit (step 420).

In the second level of authentication, the checking center 30 uses the secret salts matrix received by the salts generator 20 and the alpha code which was transmitted by the code generator 106 at the beginning of a production batch. The checking center retrieves from the database 31 the information pertaining to the production batch corresponding to the received UPI code (step 410). If the retrieval is successful, the retrieved salts matrix and the alpha code are used for reconstructing again the noise code from the received UPI code and verify the validity of the signature (step 411). If the received noise and the reconstructed noise do not match, or if no data corresponding to the production information code is present in the database, the SUPI code is identified as an invalid one and the checking center generates an answer specifying that the item is a counterfeit (step 420).

In a third level of authentication (step 412), the checking center verifies, for example, if previous queries for the same SUPI code have already been submitted more than a predefined number of times. If this is the case, there is then a suspicion that the SUPI code may be a clone of a valid code, identically printed on a large number of counterfeits. In this case, the checking center issues a reply (step 430) specifying, for example, that the submitted code is valid, but the item is likely to be a counterfeit.

The discovery of cloned codes can be refined by making use of other information, for example the provenience of the query, which can be determined if the query originated from a mobile or fixed phone, or the elapsed time between queries.

In the context of the present document 'cloning' means duplicating a valid production code in multiple copies, for example for tagging counterfeited articles with.

Preferably, if the code has been found valid (step 440), the checking center retrieves the significance of said code and transmits it to the user, preferably in natural language, for example: "your code corresponds to a pack of brand XYZ, intended market of retail Switzerland", or another appropriate formulation.

In one embodiment of the present invention, the information returned by the checking center allows the tracking of the production information for each item, for examples information relatives to the production unit, the manufacturing line, the date and time of production. Such information can be returned in encoded form, or in natural language.

Optionally the checking center can formulate the significance of the codes into several languages, and choose the most appropriate language for the reply, according to the provenance of the query or to the language of the query.

In a preferred variant of the invention, the public interface to the checking center includes a SMS (Short Message Service) or USSD (Unstructured Supplementary Services Data) portal 60 of a public radio communication network, like for example a telephone network supporting text or numeric messages like GSM, TDMA, CDMA, PDC, or UMTS standard networks, by which the users 80 can send queries to the checking center 30 in form of text messages, or SMS, from their own portable phone 82, and receive the reply from the checking center in the same way or by another channel, for example by a voice call. In this way the user 80 can verify an item 43 directly at the point of sale 77.

In a further variant of the interface, which can coexist with the previous SMS interface, the communication is performed over the internet 32 by a web server comprised in the checking center 30, or by an email server or a WAP (Wireless Application Protocol) server.

In another variant, also compatible with the SMS and WAP interfaces, the communication may be to a telephone voice server, able to interpret voice commands or DTMF (Dual-Tone Multi-Frequency) signals generated by a telephone keyboard.

It is an advantage of the present invention that it allows a generic, unidentified user, to authenticate a manufactured item over a public network, like for example the internet 32, a telephone network or a mobile telephone network. The user needs not identify himself, nor has he to have access to any secret code or sensitive information. Yet the system of the invention is arranged in such a way that each item can be identified in a cryptographically safe way.

In a preferred variant of the invention, some privileged user 70, for example an employee of the manufacturer, may have a preferred access to the checking center 30 and retrieve additional privileged information, unavailable to generic users, for example production volume information, or statistical information on the access to the checking center. In this case, a privileged user may query information on a particular SUPI without marking it as cloned for successive queries from ordinary customers 80.

The privileged user may communicate with the checking center 30 by means a public networks, or through an intranet connection 33.

In a further variant of the invention the checking center may provide, to the generic user or to privileged users, additional information to which it has access, which are not contained in the UPI code, like, for example expiry date, warranty information, address of a local support, or previous trade steps, importation routes and so forth.

Additionally the checking center may gather and store information on the production volumes, for example concerning the number of items produced in each production batch in each production line, as well as statistical production data per brand and per intended market. Such production volume information may be used for production management, or for official purpose, and may be available to selected users.

Identification steps may be provided for in the methods of the invention, for identifying known privileged users, for example by passwords, cookies, voice or biometric data, or by any suitable identification means. At the same time, the production center may include, or have access to, a user's right database for storing the profiles of various users, and determining which information each user has access to.

It will be appreciated that the present invention does not require a permanent connection between the manufacturing lines and the checking center, nor it requires that all the product identification codes be individually stored in a database.

In fact, according to the invention no identification code is stored. The digital signature steps of the present invention ensure that each item can be verified with a minimal transfer of confidential data, thus providing a high level of reliability and safety. Moreover the present invention allows production volume to be exactly accounted for.

In some situations, particularly if the manufactured goods are subject to special tax regulations, official government bodies may submit requests to the checking center for obtaining the appropriate production data, for example production volumes. In this case, the checking center 30 may preferably be maintained by a trusted third party independent from the producer of the manufactured items 43.

## Claims

1. Method of marking manufactured items, comprising the steps of:
- provision of a plurality of secret codes to at least one checking center and to each manufacturing line for said manufactured items;
- generation in said manufacturing lines of an ID code for each manufactured item;
- digital signature of said ID code by means of a secret derived from the collection of secret codes and known to said checking center;
- marking each manufactured item with said signed lD code.

2. The method of claim 1 wherein a covert taggant is used in said marking step.

3. The method of any of the preceding claims, wherein said plurality of secret codes is a collection of precalculated random codes.

4. The method of any of the preceding claims, wherein the provision of a plurality of secret codes includes the physical transfer of a non-volatile data support, for example a CD-ROM or a DVD-ROM, on which said plurality of secret codes is recorded.

5. The method of any of the preceding claims, wherein said secret derived from said plurality of secret codes is derived in each manufacturing line.

6. The method of any of the preceding claims, wherein part of said secret is transmitted by said code generator to said checking center via a secured network connection.

7. The method of any of the preceding claims, wherein said plurality of secret codes is a collection of random codes and which method comprises the steps of:
- generating an index by said code generator, relating to the manufacturing of one or more items;
- transmitting said index to said checking center;
- deriving said secret by said code generator, depending from said collection of random codes and depending from said index;
- digitally signing each ID code for each manufactured item with a noise code derived by said code generator by encrypting a copy of said ID code with said secret.

8. The method of the preceding claim, wherein said secret further depends from said ID code.

9. The method of claim any of the preceding claims, further comprising a step of transmitting additional information concerning the manufactured items to said checking center.

10. The method of any of the preceding claims, wherein said checking center is managed by a trusted third party, independent from the manufacturer of said manufactured item.

11. The method of any of the preceding claims, wherein said marking step is done on a packaging of said manufacturing article.

12. The method of any of the preceding claims, wherein said ID code comprises one or more of the following pieces of information:
- a production site identifier;
- a production line identifier;
- a product identifier;
- time information.

13. The method of any of the preceding claims, wherein said signed ID code is printed on said item in numerical or alphanumerical format.

14. The method of any of the preceding claims, wherein said signed ID code is printed on said item in a machine-readable format, for example OCR characters or one-dimensional barcodes or two-dimensional barcodes.

15. The method of any of the preceding claims, further comprising a step of encrypting said ID code.

16. The method of any of the preceding claims, wherein said item is a cigarette pack or a cigarette carton.

17. Manufactured item marked by the method of one or a combination of the preceding claims.

18. Method of authenticating an item marked according to the method of claim 1 comprising steps of:
- transmission by a user of said signed ID code to said checking center;
- authentication of said unique ID code in said checking center.

19. The method of claim 18, further comprising steps of:
- marking on each manufactured item of part of the information contained in said unique ID code;
- verifying by said user of the consistency of said unencrypted information with said processed information retransmitted by said checking center.

20. The method of claim 18, wherein said checking center has access to a database storing additional information in relation to each unique ID code, and wherein said additional information related to the transmitted ID code is retransmitted in said retransmit step.

21. The method of any of claims 18-20, wherein said transmission by a user of said signed ID code to said checking center is done by means of a text message on a mobile telephone network.

22. The method of any of claims 18-21, wherein said transmission by a user of said signed lD code to said checking center is done by means of an internet-connected terminal.

23. The method of any of claims 18-22, wherein said transmission by a user of said signed ID code to said checking center is done over a telephone connection by means of voice commands and/or DTMF tones.

24. The method of any of claims 18-23, wherein said checking center has means of detecting cloned codes.

25. Checking center for carrying out the method of authentication of any of claims 18-24.

26. Marking system for manufactured items comprising :
- at least one salts generator, for generating a collection of secret codes;
- one or more production lines, for the manufacturing of said items, each production line comprising:
- a code generator for generating an lD code for each manufactured item;
- data transmission means, for transmitting a secret obtained from said collection of secret codes to said checking center;
- digital signature means, for signing of said ID code by means of said secret;
- marking means for marking each manufactured item with said signed ID code.

27. The system of claim 26, wherein said marking means comprise a continuous inkjet printer or a drop-on-demand inkjet printer or a laser device.

28. The system of any of claims 26-27, wherein said production lines are arranged for the production of cigarettes or other tobacco products.

29. The system of any of claims 26-28, wherein said salts generator comprises a data recording means, for recording of said collection of secret codes on a non-volatile data support, for example a CD-ROM or a DVD-ROM.

30. The system of any of claims 26-29, wherein said checking center comprises a data interface for accepting text or numeric queries from a mobile telephone network and for transmitting text answers via said mobile telephone network.

31. The system of any of claims 26-30,wherein said checking center comprises a telephone interface for accepting voice commands and/or DTMF sequences from a telephone network, and for transmitting vocal answers via said telephone network.

32. Method of authenticating a manufactured item, comprising the steps of:
- generating a code and signing said code by a digital signature code within a code generator;
- marking said item with said signed code;
- transmitting by a user of said signed code to a central checking center over a public network;
- authenticating said signature in said public checking center;
- retrieving the significance of said code in said public checking center;
- transmitting said significance to said user over said public network.

33. Method according to claim 32, wherein said codes generated by said code generator are not stored.

34. Method according to any of claims 32-33, wherein said code is signed by means of a secret shared by said code generator and said checking center.

35. Method according to any of claims 32-33, wherein said secret is extracted from a collection of secret codes shared by said code generator and said checking center and is modified during the operation of said code generator.

36. Method according to any of claims 34-35 or, wherein said secret is different for each manufactured item.

37. Method of controlling the manufacturing volume of manufactured items marked according to the method of claim 1, comprising the steps of
- gathering manufacturing volume information in said checking center;
- providing said manufacturing volume information to a user.

38. Method according to claim 37, wherein said manufacturing volume information is deduced from the ID codes of manufactured items transmitted to said checking center.

39. Method according to claim 37 or 38, comprising a step of identification of said user.

40. Method according to previous claim, comprising a step of denying said manufacturing volume information to users not belonging to a group of privileged users.

41. Method of tracking an item marked according to the method of claim 1 comprising steps of:
- transmission by a user of said signed ID code to said checking center;
- authentication of said ID code in said checking center;
- retransmission of tracking information relative to said ID code to said user.

42. Method according to claim 41, wherein said tracking information is deduced from the ID codes of manufactured items transmitted to said checking center.

43. Method according to claim 41 or 42, comprising a step of identification of said user.

44. Method according to any of claims 41 to 43, comprising a step of denying said tracking information to users not belonging to a predefined group of privileged users.
